Europäisches Patentamt

(19) European Patent Office

Office européen des brevets

(11) Publication number : **0 366 317 B1**

# EUROPEAN PATENT SPECIFICATION

(12)

(45) Date of publication of patent specification :
26.08.92 Bulletin 92/35

(51) Int. Cl.⁵ : **C02F 7/00, C02F 3/22, C02F 3/26, C02F 1/66**

(21) Application number : **89310538.7**

(22) Date of filing : **13.10.89**

(54) Method and apparatus for improving the quality of a large amount of water.

(30) Priority : **13.10.88 JP 257617/88**
**03.08.89 JP 202123/89**
**25.09.89 JP 248522/89**

(43) Date of publication of application :
**02.05.90 Bulletin 90/18**

(45) Publication of the grant of the patent :
**26.08.92 Bulletin 92/35**

(84) Designated Contracting States :
**CH DE ES GB IT LI NL**

(56) References cited :
**EP-A- 0 220 345**
**CH-A- 534 108**
**DE-C- 563 823**
**US-A- 3 956 124**

(56) References cited :
**CHEMICAL ABSTRACTS, vol. 96, no. 16, 19th
April 1982, page 442, abstract no. 129533n;
Henrikson, Stig Arvid: "Dosing groundlimes-
tone into watercourses and lakes to lower
their acidity"; & SE-A-420 712**

(73) Proprietor : **Kaiyo Kogyo Kabushiki Kaisha
1-11 Akihabara
Taito-ku Tokyo (JP)**

(72) Inventor : **Kojima, Sadao
27-4, Mejirodai 4-chome
Hachioji Tokyo (JP)**
Inventor : **Makino, Masahiko
19-6, Maehara-higashi 5-chome
Funabashi, Chiba (JP)**

(74) Representative : **Godwin, Edgar James et al
MARKS & CLERK 57-60 Lincoln's Inn Fields
London, WC2A 3LS (GB)**

EP 0 366 317 B1

## Description

The present invention relates to a method of improving the quality of a large amount of water, in particular by increasing the quantity of dissolved oxygen and/or by adjusting the pH, and to apparatus for performing such a method.

The present invention in particular provides a method and apparatus in which water of high oxygen content is supplied into water pumped by an intermittent pneumatic water pumping unit and is diffused along with the diffusion and circulation of the pumped water, so that the quantity of dissolved oxygen in a large amount of water is improved. The present invention also provides a method and an apparatus in which water of high oxygen content is supplied into a deep layer of water of low or no oxygen content and upward and downward flows of water are caused by an intermittent pneumatic water pumping unit, so that the quantity of dissolved oxygen in a large amount of water is improved. Besides, the present invention provides a method and apparatus in which the quality of a large amount of water in a tap water supply dam, a reservoir, a pond, a moat, a river or the like is improved.

## Prior Art

An intermittent pneumatic water pumping unit is conventionally used to improve the quantity of dissolved oxygen in a large amount of water, and produces a good effect as to water of relatively small depth such as 50 m or less. For example, the quantity of dissolved oxygen in water whose amount is 5000,000t to 1,000,000t has been found improved by using an intermittent pneumatic water pumping unit having a pumping cylinder of 50 cm in diameter. An intermittent pneumatic water pumping unit proposed by the present applicant as disclosed in the Japanese Utility Model Publication No. 398/88 has been also used in many points of Japan and produced a high effect.

A proposal about the adjustment of pH level of tap water by slaked lime and a proposal about the prevention of corrosion of a water supply pipe by calcium have been made.

## Disclosure of the Invention

As for a large amount of water whose saturated dissolved oxygen layer has a small depth such as 30 cm to 1 m from the surface of the water, in a relatively-high-temperature area such as the tropical and the subtropical regions, or as for a mass of water whose layer of large depth such as 50 m or more has no oxygen, it is difficult to improve the quantity of dissolved oxygen only by using an intermittent pneumatic water pumping unit. Because said pumping unit operates so that water of no or low oxygen at the bottom of the large amount of water is pumped up to the surface of the water and diffused, and water of saturated dissolved oxygen content at and near the surface of the water is moved down to the bottom thereof to improve the quality of the water of no or low oxygen content at the bottom of the water. However, if the depth of the water of saturated dissolved oxygen content at and near the surface of the water is relatively small, only the other water of low oxygen content in the water moves on the whole so that it is difficult to quickly improve the quantity of the dissolved oxygen in the water. This is a problem. Particularly in the case that aerobic microorganisms are propagating at the bottom of the large amount of water to demand a large quantity of oxygen or that the large amount of water is a closed water such as a dam and a reservoir, into which much water of low or no oxygen content flows, it is likely that enough oxygen cannot be supplied by the intermittent pneumatic water pumping unit. Besides, it is likely that enough oxygen to propagate aerobic microorganisms to decompose a large quantity of organic substances deposited on the anaerobic ground under the large amount of water cannot be supplied by the intermittent pneumatic water pumping unit.

If the water is acid, it is difficult to change it alkaine. Although the dissolution of phosphorus from the ground under the large amount of water into it can be suppressed by supplying oxygen through the use of the intermittent pneumatic water pumping unit, it is difficult to remove phosphorus in the large amount of water. This is another problem.

The present invention was made in order to solve the problems. According to the present invention, water of high oxygen content or over-saturated oxygen content, which is generated in advance, is supplied into the water pumped by an intermittent pneumatic water pumping unit so that the water of high oxygen content is effectively diffused as rapidly as possible, to quickly increase the quantity of dissolved oxygen in a large amount of water successfully.

According to the present invention, water of high oxygen content is positively generated and then mixed into water flowing into a large amount of water, a layer of water of no or low oxygen content in a large amount of water, or water flowing into a closed large amount of water, and water of no or low oxygen content at and near the bottom of the large amount of water is pumped to the surface of the water by an intermittent pneumatic water pumping unit and agitated and mixed the water between the bottom and surface of water, so that the former problem is solved.

According to the present invention, water with slaked lime dissolved therein is supplied into the water pumped by an intermittent pneumatic water pumping unit so that the water is effectively diffused and mixed into a large amount of water to successfully perform such improvement of the quality of the water as adjust the pH level of the water and fix phosphorus to prevent the eutrophication of the water.

Accordingly, it is an object of the present invention to provide a method in which the quantity of dissolved oxygen in a large amount of water is improved and which is characterized in that water of low or no oxygen content is taken out from the large amount of water in a river or a closed water reservoir and changed into water of high oxygen content in advance; and the water of high oxygen content is supplied into water pumped by an intermittent pneumatic water pumping unit, so that the water of high oxygen content is diffused into the large amount of water along with the diffusion and circulation of the pumped water.

It is another object of the present invention to provide a method in which the quantity of dissolved oxygen in a large amount of water is improved and which is characterized in that water of low or no oxygen content is taken out from the large amount of water in a river or a closed water reservoir and changed into water of high oxygen content in advance; the water of high oxygen content is supplied into the low-or-no-oxygen-content portion of the large amount of water; and the large amount of water is discontinuously caused to flow up and down and circulate, by an intermittent pneumatic water pumping unit.

In the before mentioned objects of the present invention, an intermittent pneumatic water pumping unit comprises the upper and lower water pumping cylinders, and water pumping action is conducted on the upper water pumping cylinder and/or the lower water pumping cylinder. To generate the water of high oxygen content, air of high oxygen content of about 80% is blown into the water of low or no oxygen content taken out from the large amount of water.

It is yet another object of the present invention to provide a method in which a large amount of water is improved in quality and which is characterized in that water with slaked lime dissolved therein is supplied into water pumped by an intermittent pneumatic water pumping unit, so that the pH level of the large amount of water is adjusted along with the diffusion and circulation of the pumped water.

It is yet another object of the present invention to provide a method in which the quality of large amount of water is improved and which is characterized in that water with slaked lime dissolved therein is supplied into water pumped by an intermittent pneumatic water pumping unit, so that a calcium and phosphorus compound is produced in said large amount of water and the pH level thereof is adjusted, along with the diffusion and circulation of the pumped water.

It is yet another object of the present invention to provide a method in which the quality of large amount of water is improved and which is charac terized in that the water is injected into the lower portion of a dissolution vessel containing slaked lime; and supernatant water is taken out from the upper portion of said vessel and supplied into water pumped by an intermittent pneumatic water pumping unit.

It is yet another object of the present invention to provide a method in which a large amount of water is improved in quality and which is characterized in that slaked lime is disposed in spouted water pumped by an intermittent pneumatic water pumping unit; and water with a high concentration of the slaked lime dissolved therein is mixed into the large amount of water along with the diffusion and circulation of the pumped water as the pumped water is caused to flow and circulate.

It is yet another object of the present invention to provide a method in which the quantity of dissolved oxygen in a large amount of water and the quality of said water are improved and which is characterized in that water of high oxygen content, which is generated in advance, and water with slaked lime dissolved therein are supplied into water pumped by an intermittent pneumatic water pumping unit so that the water of high oxygen content and the water with slaked lime dissolved therein are diffused in the large amount of water along with the diffusion and circulation of the pumped water to improved the quantity of dissolved oxygen in the large amount of water and adjust the pH level thereof.

It is yet another object of the present invention to provide a method in which the quantity of dissolved oxygen in a large amount of water and the quality of said water are improved and which is characterized in that water of high oxygen content, which is generated in advance, and water with slaked lime dissolved therein are supplied into water pumped by an intermittent pneumatic water pumping unit so that the water of high oxygen content and the water with the slaked lime dissolved thereof are diffused in the large amount of water along with the diffusion and circulation of the pumped water to improve the quantity of dissolved oxygen in the large amount of water and to produce a calcium and phosphorus compound in the large amount of water and to adjust the pH level thereof.

It is yet another object of the present invention to provide a method in which the quantity of dissolved oxygen in a large amount of water and the quality of said water are improved and which is characterized in that water is injected into the lower portion of a dissolution vessel containing slaked lime; and supernatant water taken out from the upper portion of said vessel; and said water with the slaked lime dissolved therein and water of high oxygen content, which is generated in advance, are supplied into the water pumped by an intermittent pneumatic pumping unit.

It is yet another object of the present invention to provide an apparatus which is for improving the quantity of dissolved oxygen in a large amount of water and is characterized in that a high-oxygen-content water feeder is connected to a high-oxygen-content water generator to which a water intake means is connected; and the water feed means of the feeder is connected to the water pumping cylinder of an intermittent pneumatic water pumping unit.

It is yet another object of the present invention to provide an apparatus which is for improving the quantity of dissolved oxygen in a large amount of water and is characterized in that a water dispersion means located at the side of inflow of water to the large amount of water, a high-oxygen-content water generator, a low-oxygen-content water intake means and an intermittent pneumatic water pumping unit are connected to each other.

The low-oxygen-content water intake means in each of the apparatuses is composed of a pump, a water suction pipe connected to the pump, and a discharge pump connected to the pump. The water feed means in the former apparatus is composed of a pump and a water conveyance pipe. The intermittent pneumatic water pumping unit is made of a single water pumping cylinder, a plurality of water pumping cylinders of a combination of an upper and a lower water pumping cylinders. The water pumping cylinder of the intermittent pneumatic water pumping unit in each of the apparatuses is about 30 cm to 80 cm in diameter and about 5 m to 30 m in length, and may be substituted by a plurality of water pumping cylinders bundled together to obtain the same performance such as obtained by an intermittent pneumatic water pumping unit having a water pumping cylinder of 1 m to 3 m in diameter. Also, the water pumping cylinder may be substituted by a combination of upper and lower cylinders, in which an upper water pumping cylinder for circulating the shallow portion of the water and a lower water pumping cylinder for circulating the deep portion of the water. Besides, water of high oxygen content may be supplied either into only the lower water pumping cylinder or into both the upper and the lower water pumping cylinders.

In each of the apparatuses, the water of high oxygen content is generated by blowing air of high oxygen content of about 60%-90% into water of low or no oxygen content, in low oxygen content the concentration of dissolved oxygen is no more than 1 mg/$\ell$. And the large amount of water to be processed is caused to discontinuously flow up and down and to circulate by the intermittent pneumatic water pumping unit as a prime mover.

In each of the apparatuses, the high-oxygen-content air generator is made of a generation cylinder which is filled with a nitrogen absorbent such as zeolite and has an air feed port in one side of the cylinder and a high-oxygen-content air takeout port in another side of the cylinder and said generation cylinder is connected to a water processing vessel through said high-oxygen-content air takeout port. Nitrogen in air is adsorbed by the nitrogen adsorbent so that air of high oxygen content is generated. The air of high oxygen is blown into the water of no or low oxygen content so that the water of high oxygen content is generated. The water of high oxygen content is supplied to the water pumped by an intermittent pneumatic water pumping unit which is installed at an appropriate portion of a lake, a pond or the like and diffused into the water therein as the water is flowed and circulated between the bottom and surface by the intermittent pneumatic water pumping unit so that the quantity of dissolved oxygen is improved. The quantity of disolved oxygen in the water in the lake, the pond or the like, after the before mentioned improvement process, can have the oxygen content of the water at about 5 mg/$\ell$. The air of high oxygen content, in the present invention has an oxygen concentration at about 60%-90%. And a nitrogen adsorbent, in the present invention, is every variety of zeolite.

It is yet another object of the present invention to provide an apparatus which is for improving the quality of water and is characterized in that the downstream end of a water feed pipe is connected to the lower portion of a dissolution vessel containing slaked lime; the upstream end of water conveyance pipe is connected to the upper portion of said vessel; and the downstream end of said water conveyance pipe is connected to the water pumping cylinder of an intermittent pneumatic water pumping unit.

It is yet another object of the present invention to provide an apparatus which is for improving the quality of water and is characterized in that a water-passable container containing a slaked lime is disposed in spouted water pumped by an intermittent pneumatic water pumping unit in which an air chamber is provided under the water pumping cylinder for supplying a specific volume of air into the water pumping cylinder at specific interval. Since the solubility of slaked lime to water is 1,600 mg/$\ell$ or 0.16% at the temperature of 20 °C. a large quantity of slaked lime put in a dissolution vessel or a large quantity of slaked lime block put in the water-passable container can be dissolved at the constant rate in the water without causing a hindrance. For that reason, the management of the apparatus is easy. For example, if a large quantity of slaked lime is put in the dissolution vessel or the water-passable container and the water is passed through the vessel or container, calcium is gradually dissolved in the water, continuously in a nearly constant state until the slaked lime is completely dissolved. For that reason, the dissolution takes place steadily without automatic control. Since 10 to 30 mg/$\ell$ of slaked lime is needed for the adjustment of the pH level of water in an ordinary tap water dam or the like, the quality of such water whose amount is about 50 to 160 times as much as that of the water containing a high concentration of the slaked lime which is dissolved by 1,600 mg/ $\ell$ as mentioned above can be improved by the present method and apparatus. Since 50 to 100 mg/$\ell$ of slaked lime is needed for the removal of phosphorus from the water in the ordinary tap water dam or the like, the quality of such water whose amount is about 32 to 16 times as much as that of the water containing the high concentration of the slaked lime which is dissolved by 1.600 mg/ℓ as mentioned above can be improved by the present method and apparatus.

When the water containing a high concentration of slaked lime is to be generated in advance in the methods provided in accordance with the present invention, the quantity of the water needs to correspond to that of the water to be processed for improving its quality. For example, the amount of the water containing the high concentration of slaked lime needs to be 10,000 t for 1,000,000 t of the water to be processed. However, the water containing a high concentration of slaked lime is generated by using the water taken out of the water to be processed. For that reason, the improvement can be smoothly and surely perfoemed.

Since the water-passable container containing a slaked lime is disposed in a pumped water diffusion area above the pumping unit in the apparatus provided in accordance with the present invention, the management of the apparatus is easy.

Once the quality of the water is improved in each of the methods and the apparatuses provided in accordance with the present invention, only the quality of water flowing into the former water is improved for improving and maintaining the quality of a large amount of water. For that reason, the cost of operation in each of the methods and the apparatuses nearly corresponds to the amount of the water flowing into the former. Besides, problems based on eutrophication are solved.

Although the capacity of each of the intermittent pneumatic water pumping units in the methods and the apparatus provided in accordance with the present invention depends on the amount of the processed water, the cross-sectional form of a dam or the like containing it, and the manners of the inflow and outflow of the water to and from the dam or like, the pumping unit needs to have one water pumping cylinder of 50 cm in diameter for 1,000,000 t of the processed water.

As a result of an experiment, it has been confirmed that water diffuses and circulates almost uniformly even if the horizontal form of the dam or the like is complicated or the distance between the shore of the dam or the like and the installed position of each of the apparatuses provided in accordance with the present invention is as large as 1,000 m or more. Therefore, the water with the slaked lime dissolved therein diffuses and circulates so that the quality of all the water in the dam or the like is improved.

It is yet another object of the present invention to provide an apparatus in which the quantity of dissolved oxygen in a large amount of water and the quality of said water are improved and is characterized in that the downstream end of a water feed pipe for supplying water of high oxygen water is connected to the water pumping cylinder of an intermittent pneumatic water pumping unit; also the downstream end of a water feed pipe for supplying water with slaked lime dissolved therein is connected to the water pumping cylinder.

Effects of the Invention

According to the present invention, water of high oxygen content is supplied into water, pumped by an intermittent pneumatic water pumping unit so that the water of high oxygen content diffuses along with the diffusion and circulation of the pumped water. If the pumping unit is a two-stage pumping unit having an upper and a lower water pumping cylinders and the water of high oxygen content is supplied into only the lower water pumping cylinder, the quantity of dissolved oxygen in only a deep layer of water can be quickly improved.

According to the present invention, water of high oxygen content is sent to the bottom of a lake or the like and upward and downward flows of water are caused by an intermittent pneumatic water pumping unit, so that water of no or low oxygen content is quickly changed into water of enough oxygen content to enable fishes and so forth to live in the lake or the like, and aerobic microorganisms on the ground of the lake or the like propagate to decompose organic substances to prevent the generation of harmful gas and the dissolution of nutrients into the water. After the decomposition of the organic substances on the ground of the lake or the like is completed, the consumption of oxygen is drastically reduced. Therefore, the supplied quantity of water of high oxygen content can be diminished after a certain period of time. If green algae becomes propagated in the lake or the like, it is conceivable that the algae supply oxygen to make it possible to obtain a necessary quantity of dissolved oxygen in the lake or the like only through the operation of a pumping unit after the decomposition of the organic substances is completed.

The present invention can be effectively applied to a watery place where the depth of the high-oxygen-content layer of water at and near the surface of the water is small as in the lake, pond or the like of the tropical and subtropical regions. For example, the depth of the high-oxygen-content layer of water in a lake located at the Amazon river and being 100 m in depth and 500,000,000 t in water amount is about 30 cm to 1 m, and that of the no-oxygen-content layer of the water is overwhelmingly large. For that reason, it is nearly impossible to improve the quantity of dissolved oxygen in the water of the lake only by an intermittent pneumatic water pumping unit. However, according to the present invention, the quantity of dissolved oxygen in the water of the entire lake can be relatively easily increased to 5 mg/ℓ, for example.

According to the present invention, slaked lime is dissolved in water so that water contains a high concentration of the slaked lime. And said water is then diffused into water to be processed for improving quality and mixed therewith. The water of high slaked lime content can thus be easily mixed with the water to be processed to quickly and uniformly set the mixture at a concentration such as a pH level of about 7. The pH level of the processed water can thus be adjusted through the use of the slaked lime to prevent the corrosion of an iron pipe or the like. Since calcium dissolved from the slaked lime into the water combines with dissolved phosphorus or the like to form an insoluble deposit, the quantity of the dissolved phosphorus or the like is greatly reduced to decrease the eutrophication of the processed water.

Brief Description of the Drawings

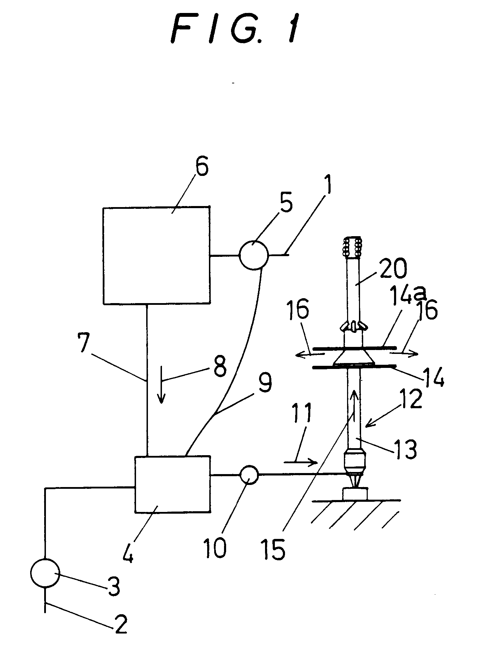

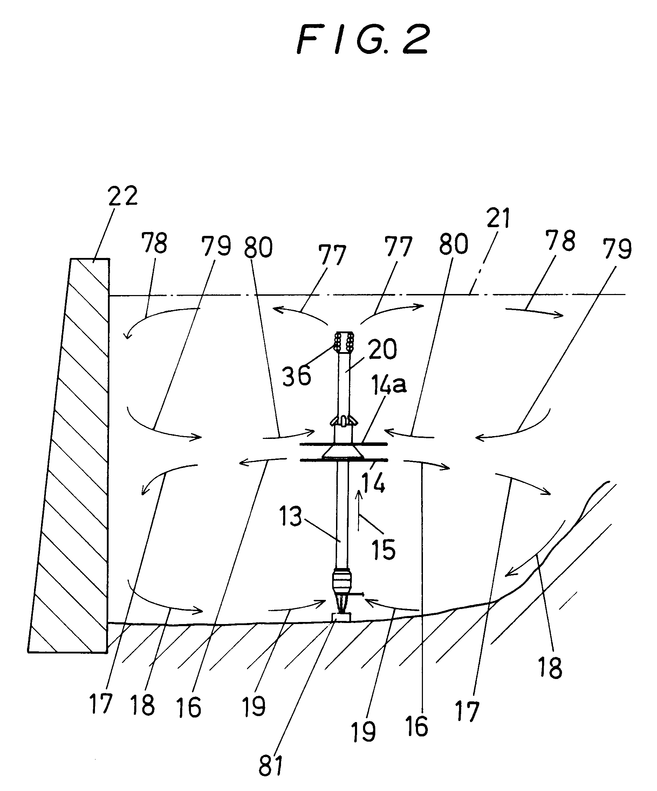

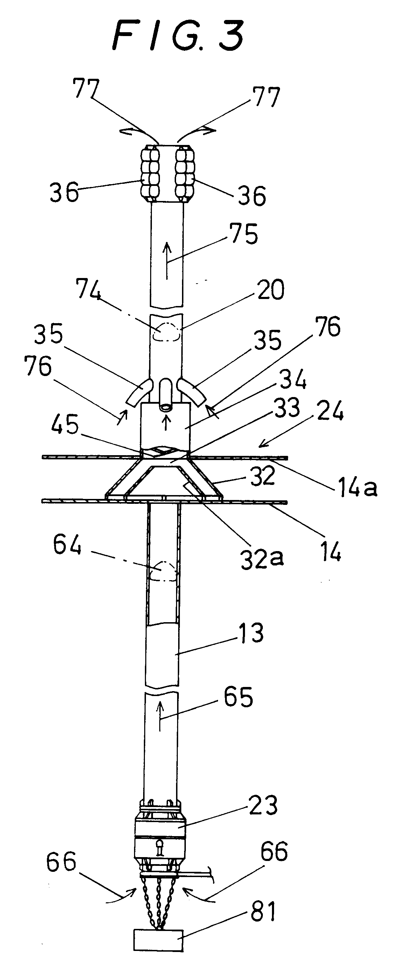

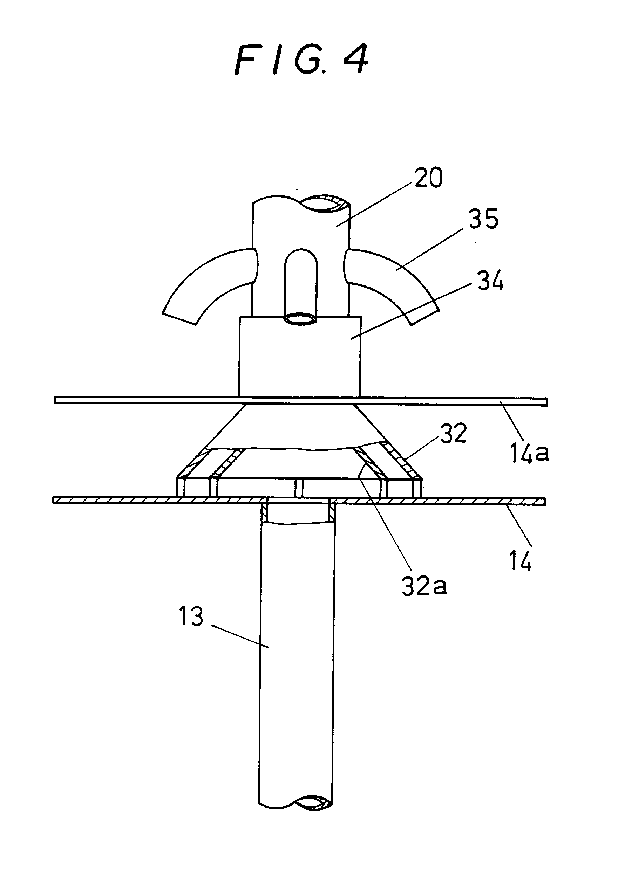

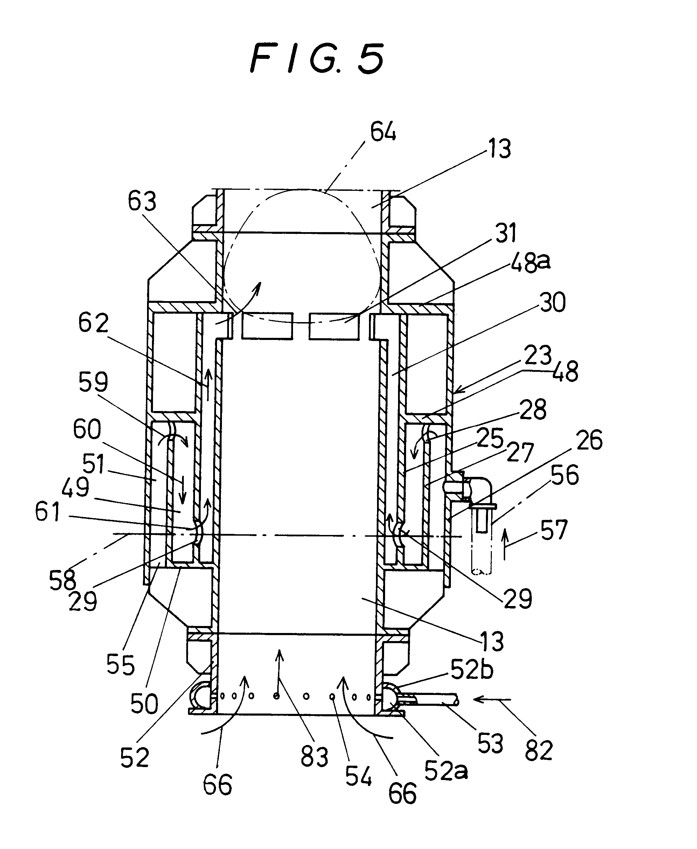

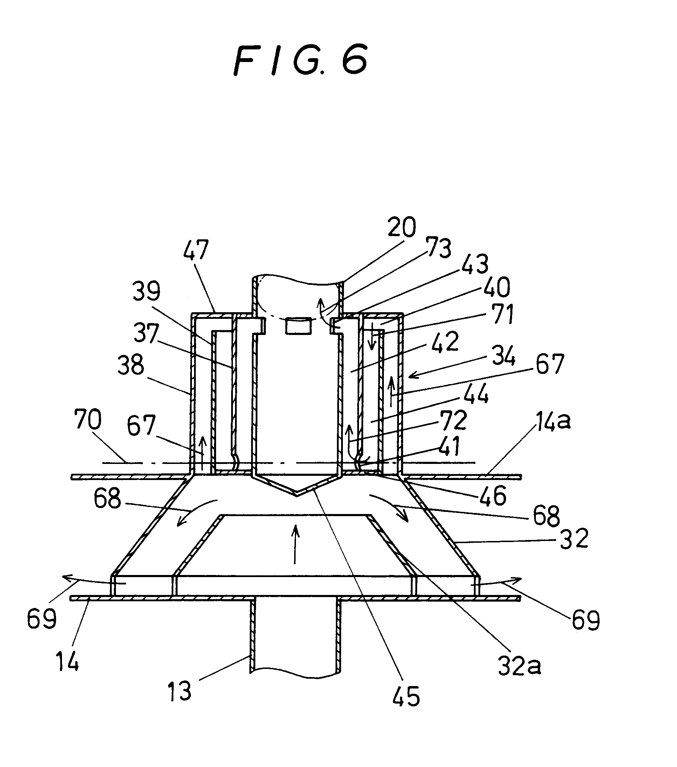

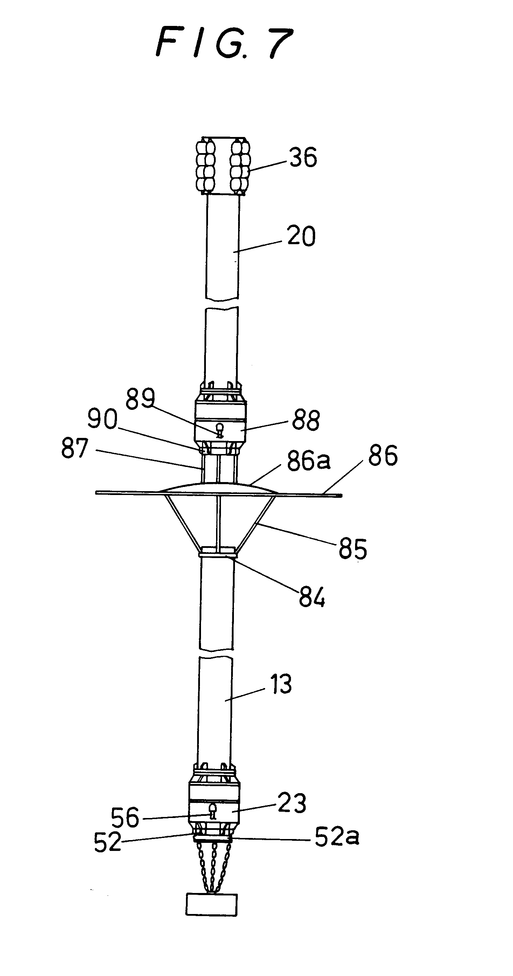

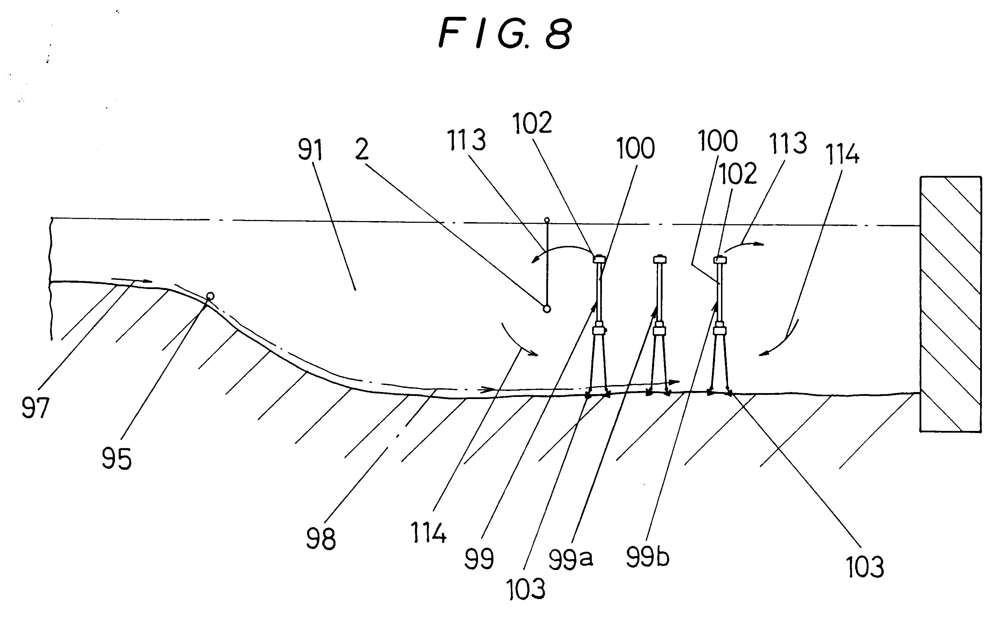

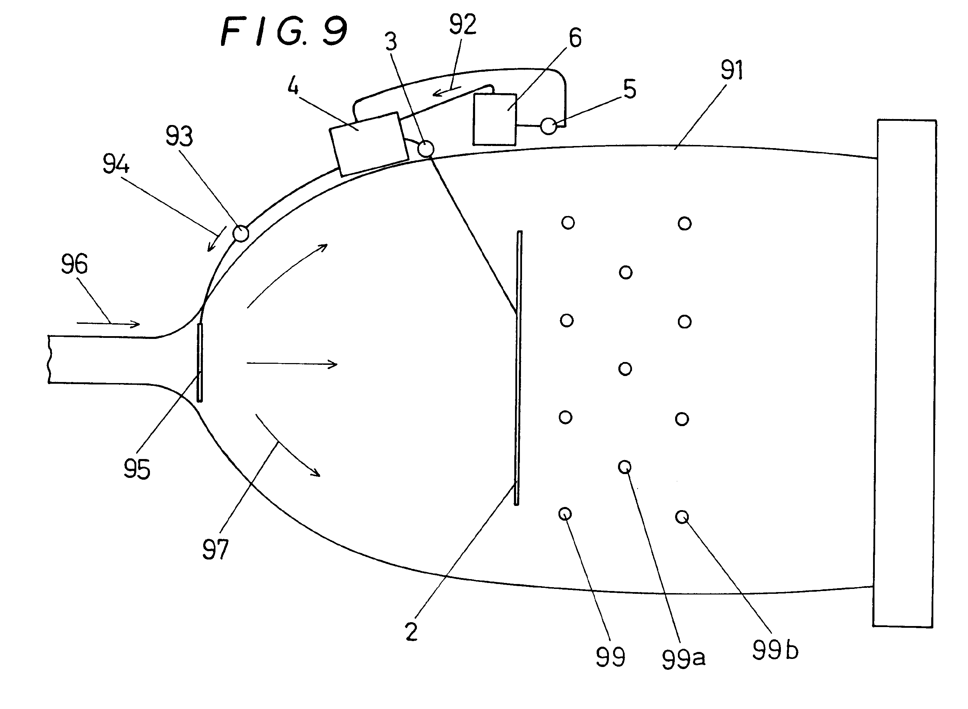

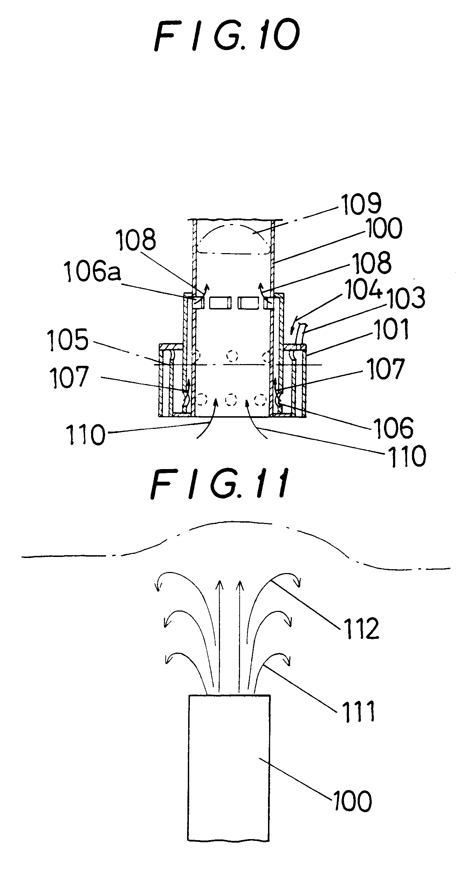

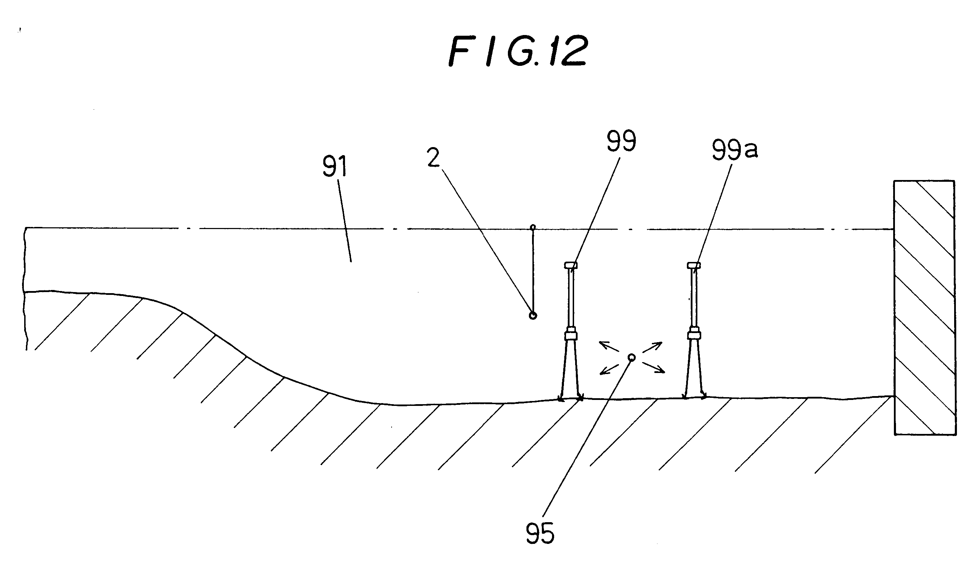

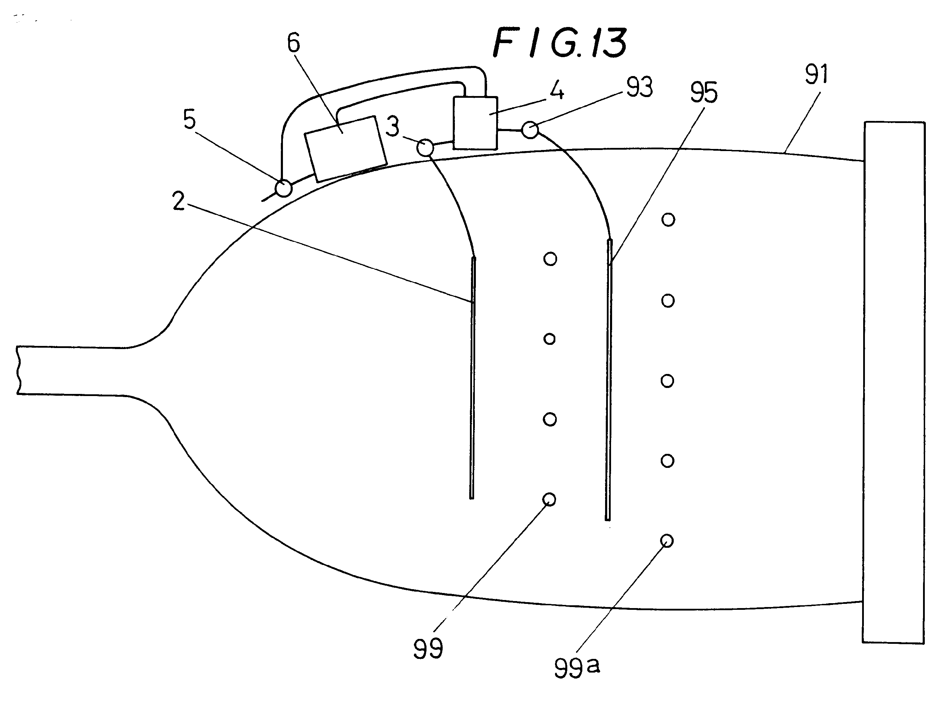

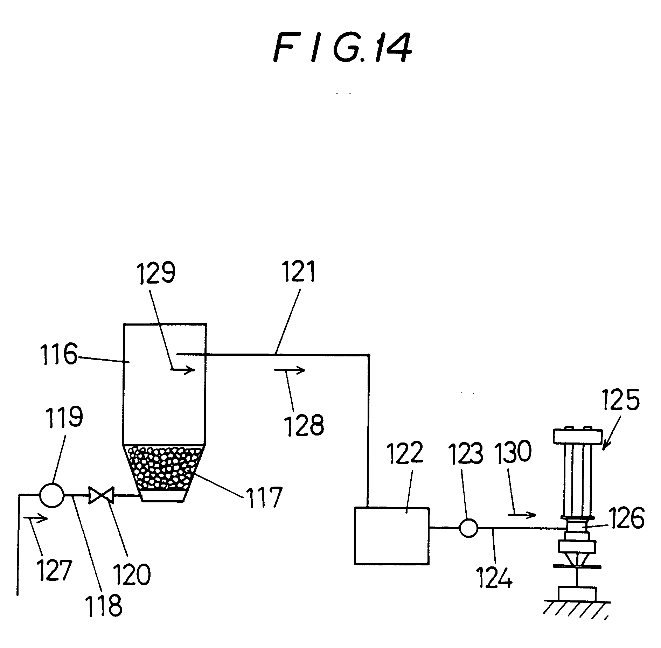

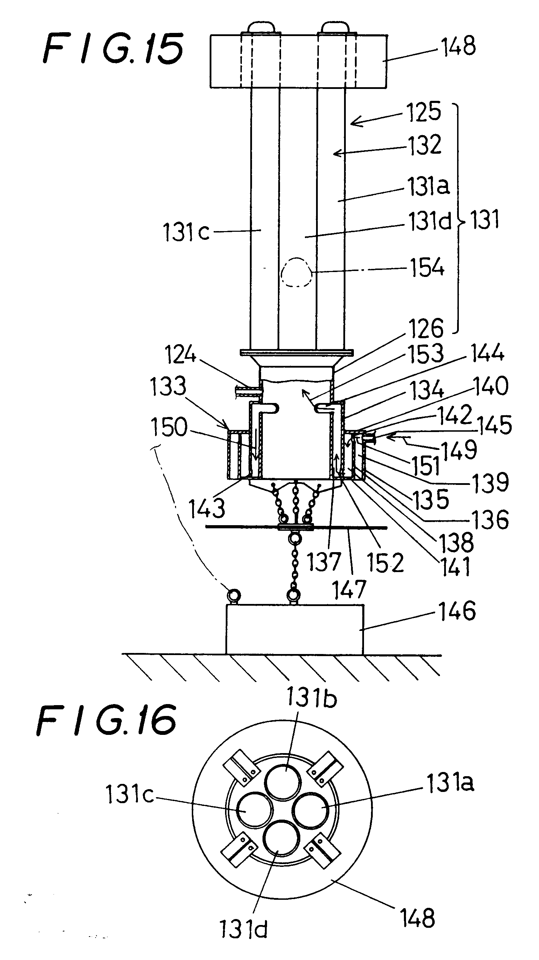

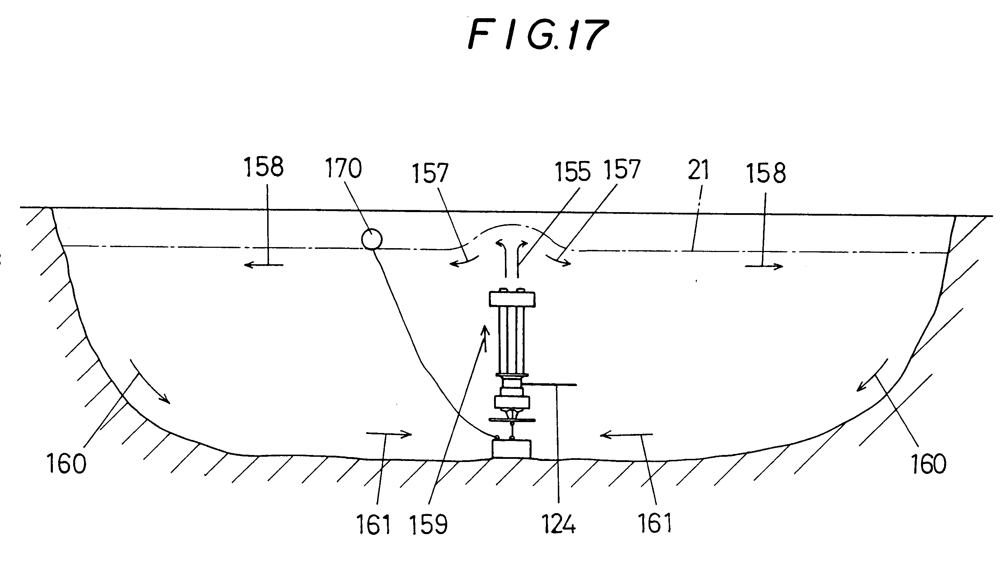

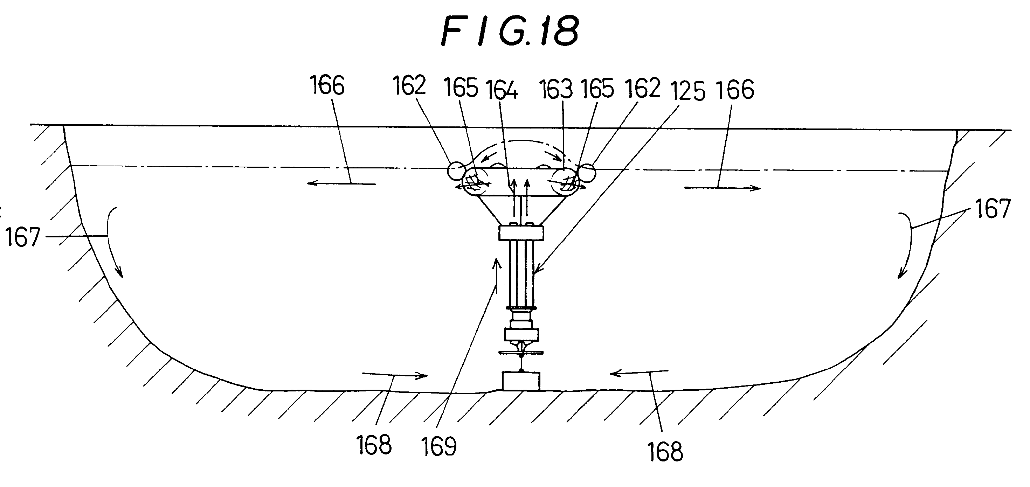

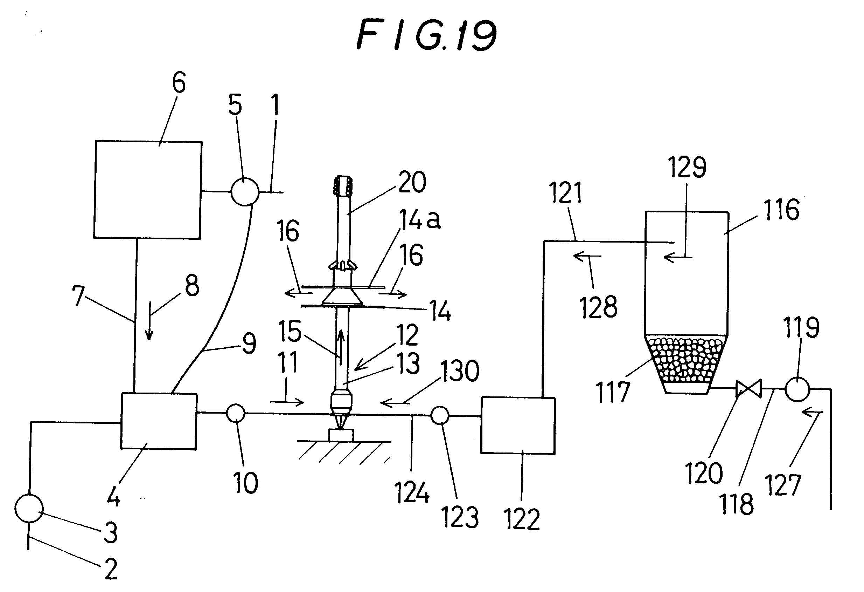

Fig. 1 is a diagrammatic view for describing the supply of high-oxygen-content water in an embodiment of the present invention. Fig. 2 is a view for describing the operation of the embodiment. Fig. 3 is a cutaway front view of an intermittent pneumatic water pumping unit in the embodiment. Fig. 4 is an enlarged cutaway front view of the connection part of the upper and lower water pumping cylinders of the water pumping unit. Fig. 5 is an enlarged sectional view of the lower air chamber of the water pumping unit. Fig. 6 is an enlarged sectional view of the upper air chamber of the water pumping unit. Fig. 7 is a front view of a major part of an intermittent pneumatic water pumping unit in another embodiment of the present invention. Fig. 8 is a front view of yet another embodiment of the present invention. Fig. 9 is a plan view of the embodiment shown in Fig. 8. Fig. 10 is an enlarged sectional view of a major part of an intermittent pneumatic water pumping unit in the embodiment shown in Fig. 8. Fig. 11 is a view for describing the state of water pumping in the embodiment shown in Fig. 8. Fig. 12 is a front view of yet another embodiment of the present invention. Fig. 13 is a plan view of the embodiment shown in Fig. 12. Fig. 14 is a diagrammatic view for describing the feed of slaked-lime-dissolved water in yet another embodiment of the present invention. Fig. 15 is an enlarged cutaway front view of an intermittent pneumatic water pumping unit in the embodiment shown in Fig. 14. Fig. 16 is a plan view of the water pumping unit shown in Fig. 15. Fig. 17 is a view for describing the installation of equipment in the embodiment shown in Fig. 14. Fig. 18 is a view for describing the installation of equipment in yet another embodiment of the present invention. Fig. 19 is a diagrammatic view for describing the supply of high-oxygen-content water and slaked-lime-dissolved water in yet another embodiment of the present invention.

Description of Preferred Embodiments

(Embodiment 1)

An embodiment of the present invention is hereafter described with reference to Figs. 1, 2, 3, 4, 5 and 6. In an apparatus which is the embodiment and is for improving the quantity of dissolved oxygen in a large amount of water, some of the water is pumped up from a large amount of water to be processed to a water processing vessel 4 through a water take pipe 2 by a pump 3, and air is supplied to an air processing vessel 6 by a pump 5. Nitrogen is adsorbed from the air in the air processing vessel 6 so that the air is changed into air of high oxygen content such as 80%. The air of high oxygen content is supplied, under pressure, from the air processing vessel 6 to the water processing vessel 4 through an air feed pipe 7 as shown by an arrow 8 in Fig. 1. A portion of the air, which is supplied to the air processing vessel 6, is obtained through a suction pipe 1 for the pump 5, and the other portion of the air is obtained through an air passage pipe 9 from the water processing vessel 4. In the vessel 4, the air of high oxygen content and drops of the water are put into contact with each other in a conventional manner so that the oxygen of the air is dissolved into the drops of the water to change the water into water of high oxygen content such as 40 mg/ℓ. After the dissolution of the oxygen, the remaining air is sent back to the suction side of the pump 5 through the air passage pipe 9. The water of high oxygen content is sent, under pressure, to the lower portion of an intermittent pneumatic water pumping unit 12 by a pump 10 as shown by an arrow 11 in Fig. 1, so that the water is mixed with pumped water. For example, when water of high oxygen content of 40 mg/ℓ is sent by 5 t per minute to the lower portion of the pumping unit 12 and mixed with the pumped water, 40 tons of water to 5 mg/ ℓ in oxygen content is obtained. In that case, the quantity of dissolved oxygen in 2,400 t of water per hour or in 77,600 t of water per day is improved. The water of high oxygen content is applied to the lower portion of the lower water pumping cylinder 13 of the pumping unit 12 as shown by the arrow 11 in Fig. 1, ascends together with the pumped water as shown by an arrow 15, is discharged in between guide plates 14 and 14a, and circulatively flows in the deep layer of the large amount of water as shown by arrows 16, 17, 18 and 19 in Fig. 2, so that the quantity of dissolved oxygen in the deep layer is improved. The pumping unit 12 also has an upper water pumping cylinder 20. Shown at 21 and 22 in Fig. 2 are the surface of the large amount of water and an embankment, respectively.

The apparatus is described with reference to Figs 3, 4, 5 and 6 from now. And air chamber 23 is provided outside the lower portion of the lower water pumping cylinder 13. The lower end of the upper water pumping cylinder 20 is connected to the upper portion of the lower water pumping cylinder 13 through a separator 24. A short cylinder 52 provided with a high-oxygen-content water feeder 52a is connected to the lower end of the lower water pumping cylinder 13. An inner cylinder 25 is movable fitted outside the lower portion of the lower water pumping cylinder 13. An outer cylinder 26 is movably fitted outside the inner cylinder 25 so that a prescribed gap is kept between them. A partition cylinder 27 is provided between the inner and the outer cylinders 25 and 26. Water passage holes 28 and 29 are provided in the lower portion of the inner cylinder 25 and the upper portion of the partition cylinder 27, respectively. The air chamber 23 is thus formed. Water passage holes 31 are provided in the lower water pumping cylinder 13 at the upper portion of the space 30 between the cylinder 13 and the inner cylinder 25. The upper end of the air chamber 23 is closed with a top plate 48a. The lower end of the space 30 and that of the space 49 between the inner cylinder 25 and the partition cylinder 27 are closed with a closure plate 50. The lower end of the space 51 between the partition cylinder 27 and the outer cylinder 26 is an opening 55 communicating with the outside water. The high-oxygen-content water feeder 52a has an annular cover 52b outside the short cylinder 52. A water feed pipe 53 is connected to the outer portion of the annular cover 52b. A plurality of small water passage holes 54 are provided at equal intervals in the short cylinder 52 inside the annular cover 52a. Shown at 56 in Fig. 5 is an air feed hose for sending pressurized air continuously to the air chamber 23.

As shown in Fig. 3, the guide plate 14 horizontally and circularly extends with a prescribed length outward from the upper end of the lower water pumping cylinder 13. Separation plates 32 and 32a each shaped as a truncated cone are provided over the guide plate 14 so that a prescribed small gap is kept between the separation plates 32, 32a. The guide plate 14a is provided over the separation plates 32 and 32a so that the guide plate 14a extends outward similarly to the other guide plate 14. An air chamber 34 is provided over the guide plate 14a, and communicates with a water passage hole 33, in Fig. 3. The lower end of the upper water pumping cylinder 20 is connected to the upper portion of the air chamber 34, in Fig. 6. A plurality of water suction pipes 35 are upwardly connected to the upper water pumping cylinder 20, and floats 36 are attached to the upper portion of the cylinder 20, in Fig. 3.

As shown in Fig. 6, an inner and an outer cylinders 37 and 38 are movably fitted outside the lower portion of the upper water pumping cylinder 20 so that a prescribed gap is kept between the inner and the outer cylinders 37, 38. A partition cylinder 39 is provided between the inner and the outer cylinders 37 and 38. A water passage hole 40 and a water passage hole 41 are provided in the upper portion of the partition cylinder 39 and the lower portion of the inner cylinder 37, respectively. Water passage holes 43 are provided in the upper water pumping cylinder 20 at the upper portion of the space 42 between the cylinder 20 and the inner cylinder 37. The lower ends of the upper water pumping cylinder 20, the space 42 and the space 44 between the inner cylinder 37 and the partition cylinder 39 are closed with a closure plate 46. The upper end of the air chamber 34 is closed with a top plate 47.

The operation of the apparatus is described in detail from now on. When the pressurizied air is introduced into the air chamber 23 through the air feed hose 56 as shown by an arrow 57 in Fig. 5, the air accumulates in the chamber starting with the upper portions of the spaces 49 and 51 of the chamber 23, to push down the levels of water in the spaces 49, 51. When the levels of water in the spaces 49 and 51 are pushed down to the water passage holes 29 as shown by a chain line 58 in Fig. 5, the pressurized air in the air chamber 23 enters in to the lower water pumping cylinder 13 through the spaces 51, 49 and 30 and the water passage holes 28, 29 and 31 as shown by arrows 59, 60, 61, 62 and 63 in Fig. 5, so that the air forms a large bubble 64. The bubble 64 then ascends in the lower water pumping cylinder 13 as shown by an arrow 65 in Fig. 3, so that the water is sucked into the cylinder through the lower end thereof as shown by an arrow 66. The water is thus pumped up. The large bubble 64 collides against a closure plate 45 so that the bubble breaks into small bubbles which ascend as shown by an arrow 67 in Fig. 6 and accumulate in the air chamber 34. The pumped water flows between the guide plates 14 and 14a as shown by arrows 68 in Fig. 6 and diffuses as shown by arrows 69 therein, and flows back as shown by arrows 16, 17, 18 and 19 in Fig. 2. The air accumulating in the air chamber 34 pushes down the level of the water therein similarly to the other air chamber 23. When the level of the water is pushed down to a position shown by a chain line 70 in Fig. 6, the air is discharged into the upper water pumping cylinder 20 through the spaces 44 and 42 and the water passage holes 40, 41 and 43 as shown by arrows 71, 72 and 73 in Fig. 6, so that the air forms a large bubble 74, which ascends in the cylinder 20 as shown by an arrow 75 in Fig. 3. Water sucked into the upper water pumping cylinder 20 through the water suction pipes 35 as shown by arrows 76 in Fig. 3 is pumped up as shown by an arrow 75 therein. The pumped water is discharged from the upper end of the upper water pumping cylinder 20 as shown by an arrow 77 in Figs. 2 and 3, and mixes with the water at and near the surface thereof as the discharged water diffuses and flows back as shown by arrows 78, 79 and 80 in Fig. 2. The upper and lower water pumping cylinders 20 and 13 are kept upright by a weight 81 and the floats 36.

The water of high oxygen content is supplied as shown by an arrow 82 in Fig. 5, so that the water enters into the short cylinder 52 through the small water passage holes 54, mixes with the pumped water and ascends as shown by an arrow 83 in Fig. 5. As a result, the water of high oxygen content flows back along with the ascent and diffusion of the pumped water as shown by the arrows 16, 17, 18 and 19 in Fig. 2, so that the quantity of dissolved oxygen in the deep layer of the large amount of water is gradually increased. The quantity of dissolved oxygen in the large amount of water is thus improved.

Although the water of high oxygen content is supplied into the lower water pumping cylinder 13 in the embodiment, the present invention is not confined thereto but may be otherwise embodied so that the water of high oxygen content is supplied to the upper water pumping cylinder 20 as well if necessary.

Although the intermittent pneumatic water pumping unit in the embodiment is made of the upper and the lower water pumping cylinders, the present invention is not confined thereto but may be otherwise embodied so that the pumping unit is made of a single air and water pumping cylinder or a plurality of air and water pumping cylinders bundled together.

(Embodiment 2)

Another embodiment of the present invention is hereafter described with reference to Fig. 7. The embodiment is an apparatus for improving the quantity of dissolved oxygen in a large amount of water. The difference of the embodiment from the embodiment 1 is that the upper and lower air chambers 88 and 23 of the intermittent pneumatic water pumping unit in the embodiment 2 are nearly the same as each other in constitution. In the embodiment 2, the lower air chamber 23 is provided outside the lower portion of a lower water pumping cylinder 13, a short cylinder 52 is connected to the lower end of the lower water pumping cylinder 13, and a high-oxygen-content water feeder 52a for supplying water of high oxygen content to the short cylinder 52 is provided. A ring 84 is secured to the upper end of the lower water pumping cylinder 13. A number of support rods 85 extend upward from the ring 84 and support a guide plate 86 on the upper ends of the rods. The guide plate 86 has a central projecting portion 86a. A number of support legs 87 are provided along a circle on the projecting portion 86a. A short cylinder is coupled to the upper ends of the support legs 87 and connected to the lower end of an upper water pumping cylinder 20. The air chamber 88 is provided at the lower end of an upper water pumping cylinder 20. Air feed hoses 56 and 89 are connected to the air chambers 23 and 88, respectively, to supply pressurized air continuously thereto so that air bubbles are intermittently discharged from the air chambers into the upper and the lower water pumping cylinders 20 and 13, respectively, and ascend therein. As a result, water is pumped up. Although the high-oxygen-content water feeders 52a and 90 are provided at the lower ends of the air chambers 23 and 88, respectively, in the embodiment 2, the present invention is not confined thereto but may be otherwise embodied so that the feeders are provided at the middle-height portions of the lower and the upper water pumping cylinders 13 and 20 to supply water of high oxygen content into the middle-height portions of water pumping cylinders.

(Embodiment 3)

Yet another embodiment of the present invention is hereafter described with reference to Figs. 8, 9 and 10. In the embodiment, water of no oxygen content in a lake 91 is pumped up to a water processing vessel 4 through a water intake pipe 2 by a pump 3, as shown in Fig. 9. Air is supplied to an air processing vessel 6 by a pump 5. In the air processing vessel 6, nitrogen is absorbed from the air so that the air is changed into air of high oxygen content such as 80%. The air of high oxygen content is introduced, under pressure, into the water processing vessel 4 as shown by an arrow 92. In the water processing vessel 4, the air of high oxygen content and drops of the water are put into contact with each other in a conventional manner so that the oxygen of the air is dissolved into the water drops. The water is thus quickly changed into water of high oxygen content such as 40 mg/$\ell$. After the dissolution, the remaining air is sent back to the suction side of the pump 5. The water of high oxygen content is sent, under pressure, to a water dispersion pipe 95 by a pump 93 as shown by an arrow 94 in Fig. 9, and is dispersed from the pipe, so that the water quickly mixes with low-oxygen-content water flowing into the lake 91 as shown by an arrow 96 in Fig. 9. For example, when the low-oxygen-content water flows by 80 t per second into the lake 91 and has an average oxygen content of 0.5 mg/$\ell$ and the water of high oxygen content is dispersed by 10 tons per second from the dispersion pipe 95, the oxygen content of all the water flowing into the lake 91 is changed to about 5 mg/$\ell$. Since the low-content-oxygen water flowing into the lake 91 usually flows to the central portion thereof along the bottom of the lake as shown by arrows 97 and 98 in Fig. 8, a large number of intermittent pneumatic water pumping units 99, 99a and 99b are alternately disposed in three rows and operated respectively so that upward and downward water flows are caused around each of the pumping units. As a result, the low-oxygen content water flowing into the lake 91, saturated-oxygen-content water at and near the surface of the lake and no-oxygen-content or low-oxygen-content water in the intermediate-depth layer of the lake are mixed with each other so that they are all changed into processed and improved water of prescribed oxygen content.

Each of the intermittent pneumatic water pumping units 99, 99a and 99b includes a water pumping cylinder 100, an air chamber 101, a float 102, and a fastening member 103 such as an anchor, as shown in Figs. 8 and 10. Although the water pumping cylinder 100 is a single cylinder, it may be substituted by a plurality (two to ten and several ) of single cylinders bundles together or be substituted by a combination of an upper and a lower water pumping cylinders. If the water pumping cylinder 100 is made of four mutually bundled cylinders each having a diameter of 70 cm, the cross-sectional area of the water pumping cylinder is 1.5 m². If water is pumped up at the rate of 1.5 m per second through the water pumping cylinder 100 made of the four mutually bundled cylinders, the water is pumped up by about 200,000 t per day. If thirty water pumping cylinders each made of such four mutually bundled cylinders are installed, water is pumped up by about 6,000,000 t per day or by about 500,000,000 t in eighty days. However, since the pumped water mixes with water about ten times as much as the former in reality, the pumped water may be less than the above-mentioned quantity. In each of the intermittent pneumatic water pumping units, pressurized air in introduced, under pressure, into an air chamber 101 through an air feed hose 103 as shown by an arrow 104 in Fig. 10, to push down the level 105 of water in the air chamber. When the level 105 of water is pushed down to water passage holes 106, the air enters into the water pumping cylinder 100 through the water passage holes 106 and 106a as shown by arrows 107 and 108 in Fig. 10, so that the air forms a large bubble 109, which ascends in the cylinder to push up or suck up the water therein. For that reason, the water around the lower end of the water pumping cylinder 100 is also sucked up into it as shown by arrows 110 in Fig. 10, so that the water is pumped up to the surface of the lake 91. The water pumped up to the surface of the lake 91 mixes quickly with the water between the upper end of the water pumping cylinder 100 and the surface of the lake. Since the speed of the pumped water in the cylinder 100 decreases from the diametrally central portion of the cylinder 100 toward the diametrally peripheral portion thereof, the water ascends therein to receive external forces which cause the water to curve outward from the upper end of the cylinder as shown by arrows 111 and 112 in Fig. 11. For that reason, the pumped water going out of the cylinder 100 mixes quickly with the water around the cylinder. Since the difference between the specific gravity of the water at and near the bottom of the lake 91 and that of the water at and near the surface thereof is decreased by the quick mixing of the pumped water with the other water, the mixed water diffuses without quickly descending, so that the mixed water can often spreads by several hundred meters to several thousand meters around from the water pumping cylinder 100. However, if the water pumping units 99, 99a and 99b are alternately disposed at intervals of 100 m each, the mixed water spreads by about a half of the interval from each water pumping cylinder due to mutual interference. For that reason, the mixed water performs upward and downward flows as shown by arrows 113 and 114 in Fig. 8.

(Embodiment 4)

Yet another embodiment of the present invention is hereafter described with reference to Figs. 12 and 13. Although the water of high oxygen content is mixed with the water flowing into the lake 91 and the water is flowed and circulated up and down by an intermittent pneumatic water pumping unit to increase the quantity of dissolved oxygen in all the water of the lake in the embodiment 3, water of high oxygen-content is released into water at the bottom of the lake 91 and the mixed water is subjected to upward and downward flows by an intermittent pneumatic water pumping units to increase the quantity of dissolved oxygen in all the water of the lake in the embodiment 4. In this embodiment, a water intake pipe 2 and a water dispersion pipe 95 are provided near the bottom of the lake 91, and no-oxygen-content water sucked into the intake pipe is sent to a water processing vessel 4 by a pump 3. Air of high oxygen content of about 80% is supplied into the vessel 4 so that oxygen is dissolved into the no-oxygen-content water. The no-oxygen-content water is thus changed into water of high oxygen content of 40 mg/$\ell$. The water of high oxygen content is sent back to the bottom of the lake through the water dispersion pipe 95 by a pump 93. Intermittent pneumatic water pumping units 99 and 99a cause the water to perform upward and downward flows for efficient agitation to uniformize the quantity of dissolved oxygen in all the water of the lake 91, similarly to the embodiment 3.

(Embodiment 5)

Yet another embodiment of the present invention is hereafter described with reference to Figs. 14, 15, 16 and 17. In the embodiment, slaked lime 117 is filled in the lower portion of a dissolution vessel 116 in such a manner that water-passable containers containing the slaked lime are appropriately piled up in the vessel, for example. A water feed pipe 118 is connected to the lower portion of the vessel 116. A pump 119 and a valve 120 are provided in the pipe 118. The upstream end of a conveyance pipe 121 is connected to the upper portion of the dissolution vessel 116. A solution tank 122 is connected to the downstream end of the conveyance pipe 121. The upstream end of a water transfer pipe 124, in which a pump 123 is provided, is connected to the solution tank 122. The downstream end of the water transfer pipe 124 is connected to the water suction cylinder 126 of an intermittent pneumatic water pumping unit 125. When the pump 119 is rotated so that water is pumped up from a dam, for example, and sent to the dissolution vessel 116 as shown by an arrow 127 in Fig. 14, the water passes through the slaked lime 117 and accumulates in the vessel. The supernatant portion of the accumulated water in the vessel 116 is taken out therefrom through the conveyance pipe 121 as shown by an arrow 128 in Fig. 14. If the position of the supernatant portion of the water is higher than that of the solution tank 122, a pump for sending the supernatant portion to the tank is not needed. If the dissolution vessel 116 is hermetically sealed, the supernatant portion of the water therein is automatically moved into the transfer pipe 121 due to the action of the pump 119 as shown by an arrow 129 in Fig. 14. The water thus transferred into the solution tank 122 is sent to the water suction cylinder 126 by the pump 123 as shown by an arrow 130 in Fig. 14.

The water pumping cylinder 131 of the intermittent pneumatic water pumping unit 125 is composed of a combination 132 of four mutually bundled cylinders 131a, 131b, 131c and 131d, and the single water suction cylinder 126 connected to the lower end of the combination. The water transfer pipe 124 is connected to the water suction cylinder 126. The water pumping unit 125 has an air chamber 133 outside the lower portion of the water suction cylinder 126. An inner cylinder 134 is movably fitted with a prescribed gap outside the water suction cylinder 126, an outer cylinder 135 is movably fitted with a prescribed gap outside the inner cylinder, and a partition cylinder 136 is fitted between the inner and the outer cylinders, so that the air chamber 133 is formed. The space 137 between the water suction cylinder 126 and the inner cylinder 134, the space 138 between the inner cylinder 134 and the partition cylinder 136 and the space 139 between the partition cylinder 136 and the outer cylinder 135 are covered at the upper ends of the spaces with a top plate 140. The spaces 137 and 138 are closed at the lower ends thereof with a closure plate 141. Water passage holes 142 and 143 are provided in the upper portion of the partition cylinder 136 and the lower portion of the inner cylinder 134, respectively, so that the spaces 137, 138 and 139 communicate with each other through the holes. The space 137 communicates with the interior of the water suction cylinder 126 through a water passage hole 144. An air feed hose 145 for supplying pressurized air, a weight 146, a cover plate 147 for preventing sludge or the like from entering into the water pumping cylinder 131 as the sludge or the like is agitated up from the ground of the dam or the like, and a float 148 are provided. Since the intermittent pneumatic water pumping unit 125 is hung by the buoyancy of the float 148 secured to the outside of the upper portion of the water pumping cylinder 131 and pulled downward by the weight 146, the pumping unit is always in a vertical free floating posture as shown in fig. 17. Shown at 170 in fig. 17 is a float indicative of the installed place of the pumping unit 125. When the pressurized air is continuously supplied to the air chamber 133 as shown by an arrow 149 in fig. 15, the air accumulats in the chamber starting with the upper portion thereof, to push down the level of water in the chamber as shown by an arrow 150 in Fig. 15. When the level of water is pushed down to the water passage holes 143, the air enters into the water suction cylinder 126 through the water passage holes 142, 143, 144 as shown by arrows 151, 152 and 153, so that the air forms a large bubble, which ascends and is then divided into bubbles 154 in the four cylinders 131a, 131b, 131c and 131d in which the bubbles ascend. The water under the bubbles 154 is pulled up by the buoyancy of the bubbles, and the water over them is pushed up by the buoyancy. The pumped-up water spouts out of the upper end of the water pumping cylinder 131, lifts the surface 21 of the water of the dam as shown by arrows 155 in Fig. 17, and thereafter descends as shown by arrows 157 therein, so that the water horizontally diffuses as shown by arrows 158 therein. The water of high slaked lime content, which is supplied into the water suction cylinder 126, mixes with the water pumped up by the pumping unit 125, so that the mixed water ascends in the water pumping cylinder 131 as shown by an arrow 159 in Fig. 17 and quickly mixes with the water between the upper end of the cylinder and the surface 21 of the water of the dam. At that time, the quickly mixed water is pushed up to the protruded part of the surface 21 of the water of the dam, and then diffuses a shown by the arrows 157 in Fig. 17. A mixed water ascends before reaching the surface 21 of the water, and mixed water diffuses the depth of 1 m to 3 m, for example, under the surface 21 of the water of the dam, reaches the shore or the dam, and descends as shown by arrows 160, 161 in Fig. 17.

Although the water pumping cylinder 131 of the intermittent pneumatic water pumping unit 125 is composed of the four mutually bundled cylinders and the water suction cylinder under them in this embodiment, the present invention is not confined thereto but may be otherwise embodied so that the water pumping cylinder is composed of a single cylinder and a water suction cylinder or composed of an upper and a lower water pumping cylinders.

Although the water having the slaked lime dissolved therein is supplied to the water suction cylinder 126 constituting the lower portion of the water pumping cylinder 131, in this embodiment, the present invention is not confined thereto but may be otherwise embodied so that a short cylinder provided with a feeder for supplying the lower end of the water pumping cylinder with the water having the slaked lime dissolved therein is connected to the lower end of the water pumping cylinder, similarly to the embodiment 1, also may be otherwise embodied so that the water having the slaked lime dissolved therein is supplied into the middle-height portions of water pumping cylinder.

(Embodiment 6)

Yet another embodiment of the present invention is hereafter described with reference to Fig. 18. In the embodiment, a water-passable container 163 is held by floats 162 over an intermittent pneumatic water pumping unit 125, and slaked lime is provided in the container 163. When pressurized air is supplied into the air chamber of the pumping unit 125, water spouted up from the unit as shown by arrows 164 in Fig. 18 mixes with water at and near the surface of water of a dam or the like, similarly to the embodiment 5, so that the mixed water with slaked lime dissolved therein diffuses as shown by arrows 165 and 166 in Fig. 18 and descends as shown by arrows 167. The mixed water thereafter moved on the ground of the dam or the like as shown by arrows 168 in Fig. 18, and then ascends again as shown by an arrow 169. For these reasons, water in which the slaked lime is dissolved at a high concentration is quickly diffused and mixed along with water in the dam or the like, similarly to the embodiment 5.

(Embodiment 7)

Yet another embodiment of the present invention is hereafter described with reference to Fig. 19. In this embodiment, water of high oxygen content and/or water with slaked lime dissolved therein can be supplied to the water pumping cylinder of an intermittent pneumatic water pumping unit, depending on the quantity of dissolved oxygen in processed water and the pH level and quality thereof, so that the water of high oxygen content and/or the water with the slaked lime dissolved therein mixes with pumped water. The equipment in this embodiment is described above as to the embodiments 1, 2, 3, 4 and 5.

**Claims**

1. A method of improving the quality of a large amount of water, comprising introducing pre-treated water of high oxygen content, i.e. more than 5 mg/l, and/or pre-treated water containing slaked lime into water pumped by an intermittent pneumatic water pumping unit, so that the pre-treated water is diffused in the large amount of water along with the diffusion and circulation of the pumped water.

2. A method as claimed in claim 1, wherein a portion of water is taken out from the large amount of water and treated to change it into the said water of high oxygen content.

3. A method as claimed in claim 2, wherein the water of high oxygen content is generated by introducing air of high oxygen content, i.e. 60 to 90 %, into the said portion of water.

4. A method as claimed in any preceding claim, wherein the intermittent pneumatic water pumping unit comprises upper and lower water pumping cylinders, and water pumping action is conducted on the upper pumping cylinder and/or the lower pumping cylinder.

5. A method as claimed in any preceding claim, wherein the pH level of the large amount of water is adjusted by the diffusion of the pre-treated water containing slaked lime along with the diffusion and circulation of the pumped water.

6. A method as claimed in claim 5, wherein a calcium and phosphorus compound is produced from the calcium in the pre-treated water containing slaked lime and from dissolved phosphorus contained in the large amount of water, to form an insoluble deposit in order to eliminate dissolved phosphorus from the large amount of water and thereby improve the quality of the large amount of water.

7. A method as claimed in any preceding claim, wherein water is injected into the lower portion of a dissolution vessel containing slaked lime, and the supernatant portion of the water in said vessel is taken out from the upper portion of the vessel and introduced into water pumped by the pumping unit.

8. A method as claimed in any preceding claim, wherein the pre-treated water is introduced outside the pumping unit.

9. A method as claimed in claim 8, wherein the pre-treated water is introduced upstream of the pumping unit.

10. A method as claimed in claim 8, wherein the pre-treated water is introduced downstream of the pumping unit.

11. A method as claimed in claims 1 to 7, wherein the pre-treated water is introduced inside the pumping unit.

12. A method as claimed in any preceding claim, wherein slaked lime is provided in the place where water pumped by the pumping unit is discharged, whereby water with slaked lime dissolved therein is mixed with the large amount of water along with the diffusion and circulation of the pumped water.

13. Apparatus for improving the quality of a large amount of water, comprising an intermittent pneumatic water pumping unit (12;99;125) situated in the large amount of water, characterised by means (53; 95; 124; 163) for introducing pre-treated water of high oxygen content, i.e. more than 5 mg/l, and/or pre-treated water containing slaked lime into water pumped by the said unit (12;99;125) so that the pre-treated water is diffused in the large amount of water along with the diffusion and circulation of the pumped water.

14. Apparatus as claimed in claim 13, wherein the said means introduces the pre-treated water outside the pumping unit.

15. Apparatus as claimed in claim 14, wherein the said means introduces the pre-treated water upstream of the pumping unit.

16. Apparatus as claimed in claim 14, wherein the said means introduces the pre-treated water downstream of the pumping unit.

17. Apparatus as claimed in claim 13, wherein the said means introduces the pre-treated water inside the pumping unit.

18. Apparatus as claimed in any of claims 13 to 17, wherein the said means comprises high-oxygen-content water outlet means (52a;95) connected to a high-oxygen-content water generator (4) to which a water intake means (2,3) is connected.

19. Apparatus as claimed in claim 18, wherein the said outlet means (52a) is coupled to a water pumping cylinder (13) of the intermittent pneumatic water pumping unit (12).

20. Apparatus as claimed in claim 18 or 19, wherein the high-oxygen-content water generator has a generation vessel (6) filled with a nitrogen adsorbent and having an atmospheric air feed port and an oxygen-enriched air takeout port, and the takeout port is connected to a water processing vessel (4).

21. Apparatus as claimed in claim 13, wherein the downstream end of a water feed pipe (118) is connected to the lower portion of a dissolution vessel (116) containing slaked lime; the upstream end of a water conveyance pipe (121) is connected to the upper portion of the vessel (116); and the downstream end of the water conveyance pipe (121) is connected to a water pumping cylinder (126) of the intermittent pneumatic water pumping unit (125).

22. Apparatus as claimed in claim 13, wherein a water-passable container (163) containing slaked lime is provided in a pumped water diffusion path at the upper portion of a water pumping cylinder of the intermittent pneumatic water pumping unit (125).

23. Apparatus as claimed in claim 13, wherein the downstream end of a water conveyance pipe for supplying the water of high oxygen content is connected to a water pumping cylinder of the intermittent pneumatic water pumping unit; and the downstream end of a water conveyance pipe for supplying the water containing slaked lime dissolved therein is connected to the said cylinder.

24. Apparatus as claimed in any of claims 13 to 23, wherein the intermittent pneumatic water pumping unit comprises a single cylinder, a plurality of cylinders, or a combination of an upper cylinder and a lower cylinder.

**Patentansprüche**

1. Verfahren zur Verbesserung der Qualität einer großen Wassermenge, wobei vorbehandeltes Wasser von hohem Sauerstoffgehalt - d.h. über 5 mg/l - und/oder vorbehandeltes Wasser mit einem Anteil gelöschten Kalks so in das von einem intermittierend arbeitenden Druckluft-Pumpaggregat geförderte Wasser eingebracht wird, daß sich das vorbehandelte Wasser im Zuge der Diffusion und des Umlaufs des von der Pumpe geförderten Wassers in der großen Wassermenge verteilt.

2. Verfahren gemäß Anspruch 1, wobei ein Anteil Wasser der großen Wassermenge entnommen und durch geeignete Behandlung in das vorgenannte hoch sauerstoffhaltige Wasser umgewandelt wird.

3. Verfahren gemäß Anspruch 2, wobei die Gewinnung des hoch sauerstoffhaltigen Wassers dadurch erfolgt, daß Luft von hohem Sauerstoffgehalts - d.h. 60 bis 90% - in den genannten Wasseranteil eingemischt wird.

4. Verfahren gemäß einem der vorstehenden Ansprüche, wobei das intermittierend arbeitende Druckluft-Pumpaggregat über obere und untere Wasserpumpzylinder verfügt und das Pumpen des Wassers am oberen und/oder unteren Wasserpumpzylinder erfolgt.

5. Verfahren gemäß einem der vorstehenden Ansprüche, wobei durch die Diffusion des vorbehandelten, gelöschten Kalk enthaltenden Wassers in Verbindung mit der Diffusion und dem Umlauf des von der Pumpe geförderten Wassers der pH-Wert der größen Wassermenge eingestellt wird.

6. Verfahren gemäß Anspruch 5, wobei aus dem Kalzium, das in dem vorbehandelten, gelöschten Kalk enthaltenden Wasser vorhanden ist, und aus Phosphor, der in der großen Wassermenge gelöst vorliegt, eine kalzium- und phosphorhaltige Verbindung hergestellt wird, die eine unlösliche Ablagerung bildet, so daß der gelöst Phosphor aus der großen Wassermenge entfernt und dadurch die Qualität der großen Wassermenge verbessert wird.

7. Verfahren gemäß einem der vorstehenden Ansprüche, wobei Wasser in den unteren Teil eines gelösten Kalk enthaltenden Lösungsbehälters eingespritzt und der Wasserüberstand aus diesem Behälter aus dem Oberteil des Behälters abgezogen und in das von dem Pumpaggregat geförderte Wasser eingebracht wird.

8. Verfahren gemäß einem der vorstehenden Ansprüche, wobei die Einbringung des vorbehandelten Wassers außerhalb des Pumpaggregats erfolgt.

9. Verfahren gemäß Anspruch 8, wobei die Einbringung des vorbehandelten Wassers auf der Anströmseite des Pumpaggregats erfolgt.

10. Verfahrend gemäß Anspruch 8, wobei die Einbringung des vorbehandelten Wassers auf der Anströmseite des Pumpaggregats erfogt.

11. Verfahren gemäß einem der Ansprüche 1 bis 7, wobei die Einbringung des vorbehandelten Wassers innerhalb des Pumpaggregats erfolgt.

12. Verfahren gemäß einem der vorstehenden Ansprüchen wobei an dem Austrittsort des von dem Pumpaggregat geförderten Wassers gelöschter Kalk vorhanden ist, so daß sich Wasser, in dem gelöschter Kalk in Lösung vorliegt, im Zuge der Diffusion und des Umlaufs des von dem Pumpaggregat geförderten Wassers mit der großen Wassermenge mischt.

13. Vorrichtung zur Verbesserung der Qualität einer grossen Wassermenge, ausgestattet mit einem in der großen Wassermenge angeordneten Druckluft-Wasserpumpaggregat (12;99;125), gekennzeichnet durch Mittel (53; 95; 124; 163) zur Einbringung vorbehandelten Wassers von hohem Sauerstoffgehalt - d.h. über 5 mg/l - und/oder Wassers mit einem Anteil gelöschten Kalks in das von dem genannten Aggregat (12,99;125) geförderte Wasser, und zwar dergestalt, daß sich das vorbehandelte Wasser im Zuge der Diffusion und des Umlaufs des von der Pumpe geförderten Wassers in der großen Wassermenge verteilt.

14. Vorrichtung gemäß Anspruch 13, wobei die Einbringung des vorbehandelten Wassers durch das genannte Mittel außerhalb des Pumpaggregats erfolgt.

15. Vorrichtung gemäß Anspruch 14, wobei die Einbringung des vorbehandelten Wassers durch das genannte Mittel auf der Anströmseite des Pumpaggregats erfolgt.

16. Vorrichtung gemäß Anspruch 14, wobei die Einbringung des vorbehandelten Wassers durch das genannte Mittel auf der Abströmseite des Pumpaggregats erfolgt.

17. Vorrichtung gemäß Anspruch 13, wobei die Einbringung des vorbehandelten Wassers durch das genannte Mittel innerhalb des Pumpaggregats erfolgt.

18. Vorrichtung gemäß einem der Ansprüche 13 - 17, wobei das genannte Mittel eine Vorrichtung (52a;95) zum Auslaß hoch sauerstoffhaltigen Wassers umfaßt, die an ein System (4) zur Erzeugung hoch sauerstoffhaltigen Wassers angeschlossen ist, und dieses System wiederum mit einer Wasser-Einlaßvorrichtung (2,3) in Verbindung steht.

19. Vorrichtung gemäß Anspruch 18, wobei die genannte Auslaßvorrichtung (52a) mit einem Wasserpumpzylinder (13) des intermittierend arbeitenden Druckluft-Pumpaggregats gekoppelt ist.

20. Vorrichtung gemäß Anspruch 18 oder 19, wobei das System zur Erzeugung hach sauerstoffhaltigen Wassers über einen Anreicherungsbehälter (6) verfügt, der mit einem Stickstoff-Adsorptionsmittel befüllt ist und eine Umgebungsluft-Einlaßöffnung sowie eine Auslaßöffnung für die sauerstoffangereicherte Luft aufweist, wobei diese letztgenannte Auslaßöffnung an einen Wasseraufbereitungsbehälter (4) angeschlossen ist.

**21.** Vorrichtung gemäß Anspruch 13, wobei das abströmseitige Ende eines Wasserspeiserohrs (118) am Unterteil eines gelöschten Kalk enthaltenden Lösungsbehälters (116), das anströmseitige Ende eines Wasserförderrohrs (121) am Oberteil des Behälters (116) und das abströmseitige Ende des Wasserförderrohrs (121) am Wasserpumpzylinder (126) des intermittierend arbeitenden Druckluft-Wasserpumpaggregats (125) angeschlossen ist.

**22.** Vorrichtung gemäß Anspruch 13, wobei ein zur Durchleitung von Wasser geeigneter und mit gelöschtem Kalk befüllter Behälter (163) im Diffusionsweg des gepumpten Wassers am Oberteil eines Wasserpumpzylinders des intermittierenden arbeitenden Druckluft-Wasserpumpaggregats (125) angeordnet ist.

**23.** Vorrichtung gemäß Anspruch 13, wobei an dem Wasserpumpzylinder des intermittierend arbeitenden Druckluft-Wasserpumpaggregats das abströmseitige Ende eines Wasserförderrohrs zur Zuleitung des hoch sauerstoffhaltigen Wasser sowie das abströmseitige Ende eines Wasserförderrohrs zur Zuleitung des gelöschten Kalk in Lösung enthaltenden Wassers angeschlossen ist.

**24.** Vorrichtung gemäß einem der Ansprüche 13 - 23, wobei das intermittierend arbeitende Druckluft-Wasserpumpaggregat über einen einzigen Zylinder, mehrere Zylinder oder eine kombination aus einem overen und einem unteren Zylinder verfügt.

**Revendications**

**1.** Un procédé permettant d'améliorer la qualité d'une grande quantité d'eau, comprenant l'introduction d'eau prétraitée à teneur élevée en oxygène, c'est-à-dire de plus de 5 mg/$\ell$, et/ou d'eau prétraitée contenant de la chaux éteinte dans de l'eau pompée par une pompe à eau pneumatique à action intermittente, l'eau prétraitée se diffusant ainsi dans la grande quantité d'eau simultanément à la diffusion et à la circulation de l'eau pompée.

**2.** Un procédé selon la revendication 1, dans lequel une partie de l'eau est prélevée de la grande quantité d'eau et traitée en vue de la transformer en ladite eau à teneur élevée en oxygène.

**3.** Un procédé selon la revendication 2, dans lequel l'eau à teneur élevée en oxygène est produite par introduction d'air à teneur élevée en oxygène, c'est-à-dire de 60 à 90%, dans ladite partie de l'eau.

**4.** Un procédé selon l'une quelconque des revendications précédentes, dans lequel la pompe à eau pneumatique à action intermittente comprend des cylindres de pompage d'eau supérieur et inférieur, l'action de pompage de l'eau étant effectuée par le cylindre de pompage d'eau supérieur et/ou le cylindre de pompage d'eau inférieur.

**5.** Un procédé selon l'une quelconque des revendications précédentes, dans lequel la valeur pH de la grande quantité d'eau est ajustée par la diffusion de l'eau prétraitée contenant la chaux éteinte, simultanément à la diffusion et à la circulation de l'eau pompée.

**6.** Un procédé selon la revendication 5, dans lequel un composé de calcium et de phosphore est produit à partir du calcium dans l'eau prétraitée contenant la chaux éteinte et du phosphore dissous contenu dans la grande quantité d'eau, pour former un dépôt insoluble en vue d'éliminer le phosphore dissous de la grande quantité d'eau et d'améliorer ainsi la qualité de la grande quantité d'eau.

**7.** Un procédé selon l'une quelconque des revendications précédentes dans lequel l'eau est injectée dans la partie inférieure d'une cuve de dissolution contenant de la chaux éteinte, la partie surnageante de l'eau dans ladite cuve étant prélevée de la partie supérieure de la cuve et introduite dans l'eau pompée par la pompe.

**8.** Un procédé selon l'une quelconque des revendications précédentes, dans lequel l'eau prétraitée est introduite à l'extérieur de la pompe.

**9.** Un procédé selon la revendication 8, dans lequel l'eau prétraitée est introduite en amont de la pompe.

**10.** Un procédé selon la revendication 8, dans lequel l'eau prétraitée est introduite en aval de la pompe.

**11.** Un procédé selon les revendications 1 à 7, dans lequel l'eau prétraitée est introduite à l'intérieur de la pompe.

**12.** Un procédé selon l'une quelconque des revendications précédentes, dans lequel de la chaux éteinte est introduite à l'endroit où l'eau pompée par la pompe est déchargée, l'eau contenant de la chaux éteinte dissoute se mélangeant ainsi avec la grande quantité d'eau simultanément à la diffusion et à la circulation de l'eau pompée.

**13.** Un dispositif permettant d'améliorer la qualité d'une grande quantité d'eau, comprenant une pompe à eau pneumatique à action intermittente (12; 99; 125) agencée dans la grande quantité d'eau, caractérisé par un moyen (53; 95; 124; 163) servant à introduire l'eau prétraitée à teneur élevée en oxygène, c'est-à-dire de plus de 5 mg/ℓ, et/ou de l'eau prétraitée contenant de la chaux éteinte dans l'eau pompée par ladite pompe (12; 99; 125), l'eau prétraitée se diffusant ainsi dans la grande quantité d'eau simultanément à la diffusion et à la circulation de l'eau pompée.

14. Un dispositif selon la revendication 13, dans lequel ledit moyen introduit l'eau prétraitée à l'extérieur de la pompe.

15. Un dispositif selon la revendication 14, dans lequel ledit moyen introduit l'eau prétraitée en amont de la pompe.

16. Un dispositif selon la revendication 14, dans lequel ledit moyen introduit l'eau prétraitée en aval de la pompe.

17. Un dispositif selon la revendication 13, dans lequel ledit moyen introduit l'eau prétraitée à l'intérieur de la pompe.

18. Un dispositif selon l'une quelconque des revendications 13 à 17, dans lequel ledit moyen comprend un moyen de sortie d'eau à teneur élevée en oxygène (52a; 95) connecté à un générateur d'eau à teneur élevée en oxygène (4) auquel est connecté un moyen d'entrée d'eau (2, 3).

19. Un dispositif selon la revendication 18, dans lequel ledit moyen de sortie (52a) est accouplé à un cylindre de pompage d'eau (13) de la pompe à eau pneumatique à action intermittente (12).

20. Un dispositif selon les revendications 18 ou 19, dans lequel le générateur d'eau à teneur élevée en oxygène comprend une cuve de génération (6) remplie d'un adsorbant d'azote, un orifice d'alimentation d'air de l'atmosphère et un orifice de sortie d'air enrichi en oxygène, l'orifice de sortie étant connecté à une cuve de traitement d'eau (4).

21. Un dispositif selon la revendication 13, dans lequel l'extrémité aval d'un tuyau d'amenée d'eau (118) est connectée à la partie inférieure d'une cuve de dissolution (116) contenant de la chaux éteinte, l'extrémité amont d'un tuyau de transport d'eau (121) est connectée à la partie supérieure de la cuve (116) et l'extrémité aval du tuyau de transport d'eau (121) est connectée au cylindre de pompage d'eau (126) de la pompe à eau pneumatique à action intermittente (125).

22. Un dispositif selon la revendication 13, dans lequel un conteneur laissant passer l'eau (163) contenant de la chaux éteinte est agencé dans une voie de diffusion de l'eau pompée, au niveau de la partie supérieure d'un cylindre de pompage d'eau de la pompe à eau pneumatique à action intermittente (125).

23. Un dispositif selon la revendication 13, dans lequel l'extrémité aval d'un tuyau de transport d'eau, destiné à l'alimentation en eau à teneur élevée en oxygène, est connectée à un cylindre de pompage d'eau de la pompe à eau pneumatique à action intermittente, l'extrémité aval d'un tuyau de transport d'eau, destiné à l'alimentation en eau contenant la chaux éteinte dissoute étant connectée au dit cylindre.

24. Un dispositif selon l'une quelconque des revendications 13 à 23, dans lequel la pompe à eau pneumatique à action intermittente comprend un seul cylindre, plusieurs cylindres ou une combinaison d'un cylindre supérieur et d'un cylindre inférieur.

# F I G. 1

# F I G. 2

EP 0 366 317 B1

# F I G. 3

# FIG. 4

# F I G. 5

# F I G. 6

# F I G. 7

# FIG. 8

FIG. 9

# F I G. 10

# F I G. 11

# F I G.12

EP 0 366 317 B1

# FIG.13

EP 0 366 317 B1

# F I G.14

F I G.15

F I G.16

# F I G. 17

EP 0 366 317 B1

# FIG.18

166  162  165 164  163 165  162 125 166

31

167

167

168  169  168

EP 0 366 317 B1

# FIG.19